# NEUE EUROPÄISCHE PATENTSCHRIFT

(11) **EP 2 927 768 B2**
(45) Veröffentlichungstag und Bekanntmachung des Hinweises auf die Entscheidung über den Einspruch: **25.12.2024**
(45) Hinweis auf die Patenterteilung: 02.09.2020
(21) Anmeldenummer: 15159858.8
(22) Anmeldetag: 19.03.2015
(51) Int. Cl.: B60T 7/22

(54) **VERFAHREN ZUM BETREIBEN EINER SELBSTBEWEGLICHEN MOBILEN PLATTFORM**
METHOD FOR OPERATING A SELF-PROPELLED MOBILE PLATFORM
PROCÉDÉ DE FONCTIONNEMENT D'UNE PLATE-FORME MOBILE AUTOMATIQUE

(30) Priorität: 31.03.2014 DE 102014206086
(43) Veröffentlichungstag der Anmeldung: 07.10.2015
(73) Patentinhaber: Robert Bosch GmbH, 70442 Stuttgart (DE)
(72) Erfinder: Ferch, Markus, 71723 Grossbottwar (DE); von Collani, Yorck, 71717 Beilstein (DE)
(74) Vertreter: Jakelski & Althoff Patentanwälte PartG mbB

(56) Entgegenhaltungen:
- EP-A1- 2 120 122
- EP-A1- 2 506 106
- WO-A1-2012/164691
- WO-A1-2012/164691
- WO-A1-93/03399
- WO-A1-93/03399
- DE-A1- 10 324 628
- DE-A1- 102011 109 532
- DE-A1- 3 730 105
- US-A1- 2008 162 027
- US-A1- 2009 043 440

## Beschreibung

Die vorliegende Erfindung betrifft ein Verfahren zum Betreiben einer selbstbeweglichen mobilen Plattform mit wenigstens einem Sensor zur Detektion von Hindernissen in der Umgebung der mobilen Plattform. Weiterhin betrifft die Erfindung eine selbstbewegliche mobile Plattform sowie ein Computerprogramm, ein maschinenlesbares Speichermedium mit einem Computerprogramm und ein elektronisches Steuergerät, die zur Durchführung des erfindungsgemäßen Verfahrens geeignet sind.

### Stand der Technik

In verschiedenen Bereichen kommen autonom fahrende, selbstbewegliche mobile Plattformen zum Einsatz, beispielsweise als Flurförderzeuge in der industriellen Fertigung oder Lagerung oder als Transportroboter in Krankenhäusern, Pflegeheimen oder Ähnlichem (fahrerlose Transportsysteme - FTS). Bei dem Betrieb von selbstbeweglichen mobilen Plattformen müssen verschiedene Sicherheitsaspekte berücksichtigt werden. Das Sicherheitskonzept von autonom fahrenden Plattformen sollte dabei so ausgelegt sein, dass diese Fahrzeuge nicht oder, wenn überhaupt, nur mit geringer Geschwindigkeit mit Hindernissen und anderen fahrenden Plattformen kollidieren können. In diesem Zusammenhang wird eine Geschwindigkeit der mobilen Plattform unter 0,3 m/s als unkritisch angesehen. Weiterhin muss das Sicherheitskonzept gewährleisten, dass Kollisionen mit Personen sicher vermieden werden. Auch in diesem Zusammenhang wird eine Geschwindigkeit unter 0,3 m/s als unkritisch angesehen.

Für einen sicheren Betrieb der mobilen Plattformen wird eine geeignete Sensorik eingesetzt, sodass Hindernisse rechtzeitig erkannt werden können und die mobile Plattform entsprechend reagieren kann. Beispielsweise werden Abstandssensoren verwendet, die auf der Basis von Wellenlaufzeitmessungen frontale Hindernisse erkennen können. Der Fahrweg der mobilen Plattform kann damit entsprechend geplant und angepasst und Hindernisse, beispielsweise auch Menschen, umfahren werden. Je höher die Fahrgeschwindigkeit der mobilen Plattform ist, umso früher muss eine drohende Kollision erkannt werden, damit das Fahrzeug entsprechend abgebremst und/oder umgeleitet werden kann.

Üblicherweise sind selbstbewegliche mobile Plattformen mit einem Personenschutzsensorsystem ausgestattet, wobei mithilfe von insbesondere berührungslos arbeitenden Sensoren Personen detektiert werden können, die sich im Fahrweg befinden. Auf der Basis von solchen Sicherheitssensoren kann ein Sicherheitsbereich definiert werden. Sobald eine Person in diesem Sicherheitsbereich detektierbar ist, kann dies über eine Schnittstelle dem Antrieb der mobilen Plattform signalisiert werden, sodass die mobile Plattform anhalten oder langsamer fahren kann.

Besonders problematisch für einen sicheren Betrieb ist die Einschränkung des Sichtfeldes der erwähnten Sicherheitssensoren beim Einfahren in einen Kreuzungsbereich. Die Gangwände verhindern die "Sicht" der Abstandssensoren auf mögliche nahende Hindernisse (Personen), die sich innerhalb eines einmündenden Ganges auf die Kreuzung zu bewegen. Oftmals wird daher vor dem Einfahren in einen Kreuzungsbereich die maximale Geschwindigkeit abgesenkt und nach Passieren der Kreuzung wieder erhöht. Damit die mobile Plattform den Kreuzungsbereich überhaupt erkennen kann, muss entweder eine externe Kennzeichnung der Kreuzung durch entsprechende Markierungen, beispielsweise durch RFID-Markierungen (RFID - *radio frequency identification*) oder optische Marken, vorhanden sein oder das Erkennen der Kreuzung muss durch interne Maßnahmen innerhalb der mobilen Plattform realisiert werden, beispielsweise durch eine permanente Lokalisierung der mobilen Plattform in Bezug zu Umgebungsdaten. Beide Lösungen sind verhältnismäßig aufwendig, da zusätzliche Infrastrukturmaßnahmen erforderlich sind, die darüber hinaus als sicherheitsrelevante Maßnahmen überprüft und überwacht werden müssen.

Die deutsche Patentanmeldungsschrift DE 11 2011 104 645 T5 beschreibt einen mobilen Roboter, der als fahrerloses Transportfahrzeug eingesetzt werden kann, wobei dieser Roboter mit einem Totzonensensor und insbesondere einem rotierenden Bildgebungssensor ausgestattet ist. Mithilfe dieses Sensors können bildgebende Signale entlang der Fahrtrichtung aufgenommen werden, um den Standort eines Objektes in der Umgebung des Roboters erfassen und den Roboter entsprechend manövrieren zu können. Die US-Patentanmeldungsschrift US 2009/0292393 A1 befasst sich mit einem Reinigungsroboter. Um eine Reinigung im Wandbereich vornehmen zu können, weist der Reinigungsroboter einen Wandfolge-Modus auf, wobei mit einem entsprechenden Sensorsystem eine Wand detektiert wird und der Roboter an der Wand entlang geführt wird. Die europäische Patentanmeldungsschrift EP 2 120 122 A1 befasst sich ebenfalls mit einem mobilen Reinigungsroboter, der mit Näherungssensoren zur Detektion von Hindernissen ausgestattet ist. Sobald hiermit ein Hindernis detektiert wird, kann als Reaktion hierauf die Geschwindigkeit des Roboters reduziert werden.

Die US-Patentanmeldungsschrift US 2014/0095009 A1 beschreibt eine Routenführung für einen autonom beweglichen Körper, wobei eine Geschwindigkeitsentscheidungseinrichtung im Zusammenspiel mit den Bremsbedingungen und der Lokalisierung über die Geschwindigkeit entscheidet, um vor der Kollision mit einem Hindernis stoppen zu können. Die US-Patentanmeldungsschrift US 2009/0043440 A1 befasst sich mit einer autonomen mobilen Einrichtung, die mit einer Sensoreinheit für Hindernisse ausgestattet ist, sodass Kollisionen vermieden werden können. Die US-Patentanmeldungsschrift US 2008/0162027 A1 hat ein System zum Gegenstand, das es Fahrzeugen ermöglichen soll, den Verkehrsregeln in Straßensystemen zu folgen, wobei das Fahrzeug unter anderem mit einem Sensor zur Detektion von Objekten in der Umgebung des Fahrzeugs ausgestattet ist, sodass bei einem Fussgänger in der Nähe die Geschwindigkeit gestoppt oder reduziert werden kann.

### Offenbarung der Erfindung

### Vorteile der Erfindung

Das erfindungsgemäße Verfahren ist zum Betreiben einer selbstbeweglichen mobilen Plattform vorgesehen, die wenigstens einen Sensor zur Detektion von Hindernissen in der Umgebung der mobilen Plattform und Schutzabstandssensoren aufweist. Bei dem erstgenannten Sensor handelt es sich insbesondere um einen Abstandssensor, der beispielsweise auf dem Prinzip einer Laufzeitmessung von ausgesendeten Messimpulsen, beispielsweise elektromagnetischen Wellen oder akustischen Wellen, beruht. Erfindungsgemäß wird eine Abstandsmessung zwischen der mobilen Plattform und seitlichen Hindernissen, die sich längs des Fahrweges der mobilen Plattform befinden, vorgenommen. Die Geschwindigkeit und insbesondere die maximale Geschwindigkeit der mobilen Plattform wird in Abhängigkeit von diesem Abstand reduziert. Insbesondere wird die Geschwindigkeit umso stärker reduziert umso geringer der Abstand ist. Die Erfindung geht dabei davon aus, dass es im Allgemeinen günstiger ist, einen größeren Abstand zu seitlichen Hindernissen, insbesondere zu den Seitenwänden eines Ganges einzuhalten. Wenn der Abstand zu einer Gangwand oder anderen sichteinschränkenden Gebäudeteilen oder Objekten in Längsrichtung des Fahrweges zu gering ist, kommt es zu einer besonderen Sichteinschränkung, wenn die mobile Plattform in einen Kreuzungsbereich einfährt. Unter "Sichteinschränkung" ist hierbei zu verstehen, dass das Sichtfeld eines Sicherheitssensors der mobilen Plattform, der auf frontale Hindernisse ausgerichtet ist und der zur Vermeidung von Kollisionen eingesetzt wird, eingeschränkt ist. Je näher sich die mobile Plattform seitlich an einem Gebäudeteil oder einem anderen Objekt befindet und umso mehr dadurch das Sichtfeld dieser Sensorik eingeschränkt ist, umso stärker wird erfindungsgemäß die Geschwindigkeit reduziert. Auf diese Weise können Gefahrensituationen, insbesondere in Kreuzungsbereichen, entschärft werden. Kollisionen in einem Kreuzungsbereich können vermieden werden, da durch die reduzierte Geschwindigkeit die Möglichkeit eines rechtzeitigen Anhaltens oder Ausweichens der mobilen Plattform besteht. Andererseits kann aufgrund der reduzierten Geschwindigkeit der mobilen Plattform auch das sich nähernde Objekt, insbesondere eine Person, rechtzeitig ausweichen. Auch unabhängig von der besonderen Situation an Kreuzungen ist das erfindungsgemäße Verfahren vorteilhaft. Beim Befahren eines Ganges (ohne Kreuzung) bringt es Vorteile, wenn die Geschwindigkeit bei einem geringen Abstand zu einer Wand oder anderen seitlichen Objekten reduziert wird. Mithilfe der erfindungsgemäßen Maßnahme wird die (maximale) Geschwindigkeit an Engstellen verlangsamt. Engstellen zeichnen sich dadurch aus, dass der Abstand zu seitlichen Hindernissen verringert ist. Erfindungsgemäß wird in diesen Situationen die Geschwindigkeit verlangsamt. Wenn also beispielsweise der Gang verhältnismäßig eng wird, wird die Geschwindigkeit verlangsamt bzw. die maximale Geschwindigkeit reduziert, sodass bei einem Zusammentreffen der mobilen Plattform mit Personen diese Personen ausreichend Zeit haben, die Engstelle zu verlassen oder der mobilen Plattform entsprechend auszuweichen.

Insgesamt erlaubt das erfindungsgemäße Verfahren einen Betrieb der mobilen Plattform, bei dem in potenziellen Gefahrensituationen die Geschwindigkeit reduziert bzw. angepasst wird, ohne dass hierfür weitere Infrastrukturmaßnahmen erforderlich wären. Außerhalb von derartigen potenziellen Gefahrensituationen, also insbesondere außerhalb von Kreuzungsbereichen und außerhalb von Engstellen, kann sich die mobile Plattform mit einer uneingeschränkten maximalen Geschwindigkeit fortbewegen, sodass die Wirtschaftlichkeit gewährleistet ist. Dieses Wegfallen von zusätzlichen Infrastrukturmaßnahmen ist auch im Hinblick auf Sicherheitsüberprüfungen sehr vorteilhaft. Die Verlangsamung der Geschwindigkeit stellt eine sicherheitsrelevante Maßnahme dar, die daher entsprechenden Sicherheitsnormen genügen muss. Dadurch, dass weder aufwendige Algorithmen noch anderweitige zusätzliche Infrastrukturmaßnahmen erforderlich sind, ist auch eine Überprüfung dieser Funktion ohne großen Aufwand möglich.

Unabhängig von den beschriebenen Maßnahmen können natürlich auch andere sicherheitsrelevante Maßnahmen eingesetzt werden, insbesondere eine optische oder akustische Warnsignalgebung der mobilen Plattform oder Maßnahmen zur Lokalisierung der Plattform oder andere externe Infrastrukturmaßnahmen.

Im Prinzip ist es möglich, dass die bei herkömmlichen mobilen Plattformen vorgesehenen Schutzabstandssensoren, die insbesondere zur Vermeidung von Kollisionen mit frontalen Hindernissen verwendet werden, auch im Sinne der Erfindung, d.h. also zur Abstandsmessung im Hinblick auf längs des Fahrweges angeordnete Hindernisse, eingesetzt werden. Für das erfindungsgemäße Verfahren werden hierfür jedoch ein oder mehrere separate Sensoren eingesetzt, die unabhängig von den vorhandenen anderen Schutzabstandssensoren der mobilen Plattform für die Zwecke des erfindungsgemäßen Verfahrens eingesetzt werden. Je nach Ausgestaltung und Sende- und Empfangsrichtung der Sensoren können diese separaten Sensoren entsprechend auf der mobilen Plattform positioniert werden. Insbesondere können diese Sensoren im seitlichen Bereich der mobilen Plattform angeordnet sein. Wichtig hierbei ist, dass die Sensoren eine Abstandsmessung zu Objekten quer zur Fahrtrichtung, also zu seitlich auftretenden Hindernissen bzw. zu längs des Fahrweges angeordneten Hindernissen, vornehmen können. Es kann vorgesehen sein, dass diese separaten Sensoren und die anderen Schutzabstandssensoren von im Prinzip gleicher Bauart sind. Es können hierfür aber auch unterschiedliche Sensorarten eingesetzt werden.

Erfindungsgemäß werden die Signale der Detektion von längs des Fahrweges angeordneten Hindernissen derart ausgewertet und/oder gefiltert, dass eine Mindestgröße und/oder Mindestlänge der Hindernisse erkannt werden kann. Nur bei dem Erreichen dieser Mindestgröße und/oder Mindestlänge wird die Reduktion der maximalen Geschwindigkeit der mobilen Plattform ausgelöst. Durch diese Auswertung (Glättung) der Signale wird verhindert, dass bei schmalen Objekten, wie beispielsweise einer Säule oder einer Türzarge, in unnötiger Weise eine Verlangsamung erzwungen wird.

In einer bevorzugten Ausführungsform des erfindungsgemäßen Verfahrens wird die Fahrtrichtung der mobilen Plattform bei einer Auswertung der Signale der seitlichen Hindernisdetektion berücksichtigt. Es wird also nicht starr angenommen, dass immer nach vorne gefahren wird, sondern der Lenkwinkel und damit die tatsächliche Fahrtrichtung werden berücksichtigt. Je nach Fahrtrichtung erfolgt dann die Abstandsmessung zu seitlichen Hindernissen in eine andere Richtung. Wenn also beispielsweise die mobile Plattform um eine Kurve fährt, wird die Abstandsmessung zur seitlichen Gangwand entsprechend angepasst.

Vorzugsweise werden die Fahrgeschwindigkeiten der mobilen Plattform je nach Verwendung oder Einsatzgebiet der mobilen Plattform konfiguriert. So können in Abhängigkeit von unterschiedlichen Einsatzumgebungen unterschiedliche Maximalgeschwindigkeiten vorgesehen werden. Es sollte beispielsweise in einem Krankenhaus, in dem mit einem hohen Personenaufkommen zu rechnen ist, die Geschwindigkeit insgesamt etwas langsamer sein als beispielsweise in einem Warenlager. Bei der Konfiguration der Geschwindigkeiten sollten geeignete Maximalgeschwindigkeiten für verschiedene Situationen, insbesondere einerseits für den Normalbetrieb und andererseits für den Betrieb in potentiellen Gefahrensituationen, die sich durch einen engen Abstand zu seitlichen Hindernissen auszeichnen, vorgesehen werden.

Eine selbstbewegliche mobile Plattform, die gemäß dem erfindungsgemäßen Verfahren betrieben werden kann, muss wenigstens einen Sensor aufweisen, der zur Detektion von längs des Fahrweges angeordneten Hindernissen, also von seitlichen Hindernissen in Bezug auf die Fahrtrichtung der mobilen Plattform, geeignet ist. Hierbei wird die maximale Geschwindigkeit der mobilen Plattform reduziert, wenn der Abstand zu seitlichen Hindernissen einen Mindestabstand unterschreitet. Der Mindestabstand kann beispielsweise für eine Anwendung in Krankenhäusern 20 cm betragen. Es ist möglich, die Geschwindigkeit in Abhängigkeit vom Wandabstand stufenlos zu reduzieren. In anderen Ausgestaltungen kann die Geschwindigkeit in vordefinierten Stufen reduziert werden. Beispielsweise kann eine schrittweise Reduzierung der Geschwindigkeit bei bestimmten Schwellwerten des Abstands (z.B. 20 cm, 15 cm, 10 cm) vorgesehen sein. Die Schwellwerte können äquidistant oder nicht äquidistant vorgegeben werden. Das Gleiche gilt für die jeweils vorgesehene Geschwindigkeitsreduzierung.

Mit dem erfindungsgemäßen Verfahren werden Gefahrensituationen in Engstellen oder bei der Annäherung an eine Kreuzung, wenn die mobile Plattform sich relativ nah an seitlichen, sichteinschränkenden Objekten befindet, entschärft. Erfindungsgemäß weist die mobile Plattform zusätzlich zu dem oder den Sensor(en) zur Detektion von seitlichen Hindernissen übliche Sensoren zur Detektion von frontalen Hindernissen auf, die in an sich bekannter Weise als Schutzsensoren zur Vermeidung von Kollisionen mit, in Fahrtrichtung gesehen, frontalen Objekten verwendet wird. Die Sensoren sind vorteilhafterweise direkt an den Antrieb der mobilen Plattform angebunden, sodass bei der Detektion von Objekten oder Hindernissen innerhalb definierbarer Schutzbereiche die Geschwindigkeit der mobilen Plattform unmittelbar angepasst, d.h. also reduziert oder auf null gesetzt, werden kann. ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

Bei der mobilen Plattform kann es sich insbesondere um einen Transportroboter, wie er beispielsweise in Krankenhäusern oder Pflegeeinrichtungen eingesetzt werden kann und der beispielsweise mit weiteren Servicefunktionen ausgestattet sein kann, und/oder um ein Flurförderzeug, wie es beispielsweise in industriellen Lager- oder Fertigungshallen eingesetzt werden kann, handeln. Bei der mobilen Plattform kann es sich beispielsweise auch um einen Roboter handeln, der nicht oder nicht in erster Linie für Transportzwecke konzipiert ist und der beispielsweise keine Ablagefläche für Gegenstände aufweist. Es kann sich beispielsweise um einen reinen Serviceroboter handeln. Es sind jedoch auch andere Verwendungen des erfindungsgemäßen Verfahrens bzw. der entsprechend betriebenen mobilen Plattform möglich.

Weiterhin umfasst die Erfindung ein Computerprogramm bzw. ein Steuerprogramm für den Betrieb einer mobilen Plattform, das jeden Schritt des erfindungsgemäßen Verfahrens in der beschriebenen Weise durchführt. Darüber hinaus umfasst die Erfindung ein maschinenlesbares Speichermedium, auf welchem dieses Programm gespeichert ist, und schließlich ein elektronisches Steuergerät, das eingerichtet ist, die Schritte des erfindungsgemäßen Verfahrens durchzuführen. Das Steuerprogramm kann ohne Weiteres beispielsweise in bestehende mobile Plattformen integriert werden, sodass die Vorteile des erfindungsgemäßen Verfahrens auch bei bestehenden Systemen genutzt werden können.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### Kurze Beschreibung der Zeichnungen

In den Figuren zeigen:
- Fig. 1: eine schematische Darstellung einer potenziellen Gefahrensituation in einem Kreuzungsbereich;
- Fig. 2: eine schematische Darstellung einer herkömmlichen mobilen Plattform mit frontal ausgerichtetem Schutzsensor, und
- Fig. 3: eine schematische Darstellung einer mobilen Plattform mit seitlich ausgerichteten Abstandssensoren.

### Beschreibung von Ausführungsbeispielen

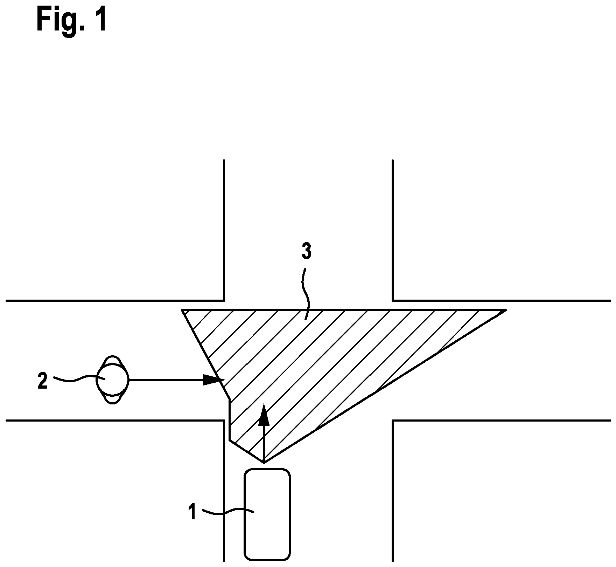

**Fig. 1** illustriert eine potenzielle Gefahrensituation in einem Kreuzungsbereich, die mithilfe des erfindungsgemäßen Verfahrens ohne tatsächliche Gefahren gemeistert werden kann. Die mobile Plattform 1 bewegt sich in autonomer Weise durch ein Gangsystem. Hierbei fährt sie in Pfeilrichtung in einen Kreuzungsbereich ein. Zeitgleich bewegt sich eine Person 2 auf diesen Kreuzungsbereich zu, wobei sich die Person 2 in einem Gang bewegt, der von links in Bezug zur Fahrtrichtung der mobilen Plattform 1 einmündet. Die mobile Plattform 1 ist in üblicher Weise mit einem frontal ausgerichteten Schutzsensor ausgestattet. Bei diesem Schutzsensor oder Sicherheitssensor handelt es sich beispielsweise um einen Laserscanner oder einen Ultraschallsensor, der den Bereich in Fahrtrichtung abtastet. Hierbei ist ein Sicherheitsbereich definierbar. Wenn ein Hindernis, beispielsweise ein physikalisches Objekt oder auch eine Person, in diesem Sicherheitsbereich detektiert wird, wird dies von der mobilen Plattform 1 erkannt und die mobile Plattform kann entsprechend reagieren. Die mobile Plattform 1 kann insbesondere die Geschwindigkeit reduzieren oder anhalten. Darüber hinaus kann ein Ausweichmanöver vorgenommen werden. In Fig. 1 ist das "Sichtfeld" des Sicherheitssensors mit 3 bezeichnet. Dieses Sichtfeld repräsentiert zugleich den Sicherheitsbereich. Problematisch bei dieser Situation ist, dass das Sichtfeld 3 des Sicherheitssensors durch die links neben der mobilen Plattform 1 befindliche Gangwand eingeschränkt ist. Die Gangwand schränkt die "Sicht" der mobilen Plattform 1 derart ein, dass die Person 2 nicht "gesehen" wird, obwohl sie sich bereits in räumlicher Nähe zu der mobilen Plattform 1 befindet. Ab einer bestimmten Geschwindigkeit der mobilen Plattform 1 wäre es nicht mehr möglich, dass die mobile Plattform 1 in dieser Situation rechtzeitig verzögert. Herkömmlicherweise wird dieses Problem so gelöst, dass die mobile Plattform bei allen Kreuzungssituationen rechtzeitig verzögert. Hierfür sind herkömmlicherweise verschiedene zusätzliche Infrastrukturmaßnahmen erforderlich. Beispielsweise werden externe Kennzeichen einer Kreuzung, beispielsweise über RFID, im Vorfeld einer Kreuzung verwendet, die über eine entsprechende Sensorik der mobilen Plattform erkannt werden können. Oder das autonome Fahrzeug kann eine Kreuzung beispielsweise anhand der eigenen Position innerhalb einer Karte erkennen. Diese Maßnahmen sind alle verhältnismäßig aufwendig. Erfindungsgemäß wird diese Situation gelöst, indem die maximale Geschwindigkeit der mobilen Plattform in Abhängigkeit von einem Abstand zu den sichteinschränkenden Gebäudeteilen oder Objekten, die sich längs der mobilen Plattform befinden, also quer zur Fahrtrichtung, reduziert wird. Je näher sich die mobile Plattform seitlich an einem Gebäudeteil oder einem anderen Objekt befindet, umso stärker ist das Sichtfeld der Sensorik eingeschränkt. Erfindungsgemäß wird daher die maximale Geschwindigkeit in Abhängigkeit vom Abstand zu solchen seitlichen Hindernissen eingeschränkt. Sobald die mobile Plattform in die Kreuzung einfährt, greift diese erfindungsgemäße Maßnahme nicht mehr. Aber sobald sich die mobile Plattform auf der Kreuzung befindet, ist die Sicht des Sicherheitssensors nicht mehr eingeschränkt, sodass dann die übliche Sicherheitsmaßnahme mittels des im Wesentlichen frontal ausgerichteten Sicherheitssensors eingesetzt werden kann. Das erfindungsgemäße Verfahren geht allgemein davon aus, dass es im Allgemeinen günstiger bzw. sicherer ist, in der Mitte eines Ganges zu fahren als nahe an der Wand. Dies trifft zum einen auf Kreuzungssituationen zu, bei denen die Sicht auf die Kreuzung durch die Nähe zur Wand eingeschränkt ist. Dies trifft zum anderen aber auch allgemein auf Engstellen zu, bei denen durch die engen Räumlichkeiten ein Ausweichen für Personen schwierig ist. Das erfindungsgemäße Verfahren lässt sich dabei ohne zusätzliche Infrastrukturmaßnahmen realisieren, was insbesondere auch im Hinblick auf die Überprüfung von Sicherheitsnormen vorteilhaft ist.

In einem Krankenhaus kann beispielsweise bei einem Abstand zur Wand von 20 cm eine kritische Distanz angenommen werden. Erfindungsgemäß kann es vorgesehen sein, dass die Maximalgeschwindigkeit einer mobilen Plattform dann auf höchstens 1 m/s, vorzugsweise auf höchstens 0,8 m/s beschränkt wird. Die konkrete Ausgestaltung des erfindungsgemäßen Verfahrens, also insbesondere, um welchen Betrag und bei welchem Wandabstand die Geschwindigkeit zu reduzieren ist, kann vor allem von den jeweiligen Eigenschaften der selbstfahrenden Plattform (z.B. Montagepunkte der Sensoren, standardmäßige Maximalgeschwindigkeit der Plattform, maximale Bremsverzögerung) und von den Annahmen über gegebenenfalls auftauchenden Personen (z.B. maximale Gehgeschwindigkeit, Abmaße, Abstand von der Wand) abhängig gemacht werden. Wenn in einem Krankenhaus bei einer Unterschreitung von beispielsweise 20 cm zur seitlichen Gangwand erfindungsgemäß eine Geschwindigkeitsreduzierung vorgenommen wird, kann der Sicherheitsabstand in Bezug auf frontale Hindernisse durchaus größer sein. In Abhängigkeit von der Maximalgeschwindigkeit und dem Bremsvermögen der Plattform kann der Sicherheitsabstand in Bezug auf frontale Hindernisse beispielsweise in einem Bereich von etwa 40 cm (z.B. Krankenhaus) bis zu etwa 200 cm (z.B. Warenlager) gewählt werden.

Mit dem erfindungsgemäßen Verfahren ist es möglich, auch ohne eine explizite Kreuzungs- und Engstellenerkennung die selbstbewegliche mobile Plattform, also das autonome Fahrzeug, in Gefahrensituationen mit einer reduzierten maximalen Geschwindigkeit, beispielsweise 0,3 m/s, und außerhalb derartiger Situationen mit einer höheren Geschwindigkeit fahren zu lassen. Die reduzierte maximale Geschwindigkeit wird erfindungsgemäß bei einem Unterschreiten eines kritischen Abstands zu seitlichen Hindernissen eingestellt, wobei der kritischen Abstand, je nach Art, Anwendung und Einsatzgebiet der mobilen Plattform, beispielsweise 20 cm betragen kann. Auf diese Weise können Gefahrensituationen an Engstellen oder in Kreuzungsbereichen, wenn das Sichtfeld der mobilen Plattform durch einen zu engen Abstand zur Seitenwand eingeschränkt ist, entschärft werden.

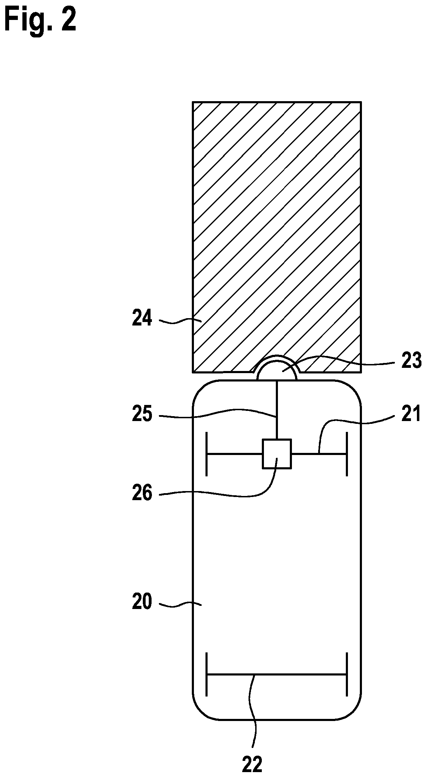

**Fig. 2** zeigt eine übliche mobile Plattform 20 mit einer vorderen (Antriebs-)achse 21 und einer hinteren (Antriebs-)achse 22. Im Frontbereich der mobilen Plattform befindet sich ein Abstandssensor 23, der zur Detektion von Hindernissen und/oder Personen im Fahrweg der mobilen Plattform 20 eingesetzt wird und der insbesondere als Sicherheitssensor zugelassen ist. Dieser Schutzsensor 23 bietet die Möglichkeit, einen Sicherheitsbereich 24 zu definieren. Sobald ein Hindernis und insbesondere eine Person in diesem Sicherheitsbereich 24 detektierbar sind, wird dies über eine Schnittstelle 25 dem Antrieb 26 der mobilen Plattform signalisiert. Die mobile Plattform 20 reagiert hierauf mit einer Verlangsamung der Geschwindigkeit oder mit einem Abbremsen. Erfindungsgemäß wird die mobile Plattform 20 so betrieben, dass die maximal zulässige Geschwindigkeit davon abhängig gemacht wird, wie groß der Abstand zu Objekten quer zur Fahrtrichtung ist, also wie groß der Abstand zu seitlichen Hindernissen ist. Wenn sich die mobile Plattform in einem Gang bewegt, sind diese seitlichen Hindernisse insbesondere die Wände des Gangsystems. Die mobile Plattform 20 wird so betrieben, dass die Maximalgeschwindigkeit niedrig ist, wenn sich die mobile Plattform nahe einer Wand befindet. Befindet sich die mobile Plattform hingegen in größerer Entfernung zu der Wand oder den Wänden, beispielsweise in der Mitte des Gangs, ist die zulässige Maximalgeschwindigkeit höher. Beim Einfahren der mobilen Plattform 20 in einen Kreuzungsbereich bietet dies den Vorteil, dass die mobile Plattform verhältnismäßig langsam fährt, wenn sie sich nahe an der Wand eines Gangs befindet. Durch die Nähe zur Wand hat sie ein eingeschränktes "Sichtfeld" auf die Kreuzung, wie es in Fig. 1 illustriert ist. Durch die reduzierte Geschwindigkeit wird vermieden, dass es zu einer nicht vorhergesehenen Kollision auf der Kreuzung kommt. Sobald die Kreuzung erreicht wird, ist zwar kein Objekt quer zur Fahrtrichtung, also kein seitliches Hindernis in geringem Abstand, mehr detektierbar. In dieser Situation ist aber das Sichtfeld des Sensors nicht mehr eingeschränkt, sodass die Geschwindigkeit in Abhängigkeit von Objekten innerhalb des Schutzbereiches 24 gemäß der üblichen Funktion des Sicherheitssensors 23 gesteuert werden kann. In Engstellen verengt sich der Abstand zu seitlichen Hindernissen, also insbesondere zu einer Seitenwand oder zu beiden Seitenwänden zwangsläufig, sodass auch hier über die erfindungsgemäße Reduzierung der maximalen Geschwindigkeit Gefahrensituationen entschärft werden.

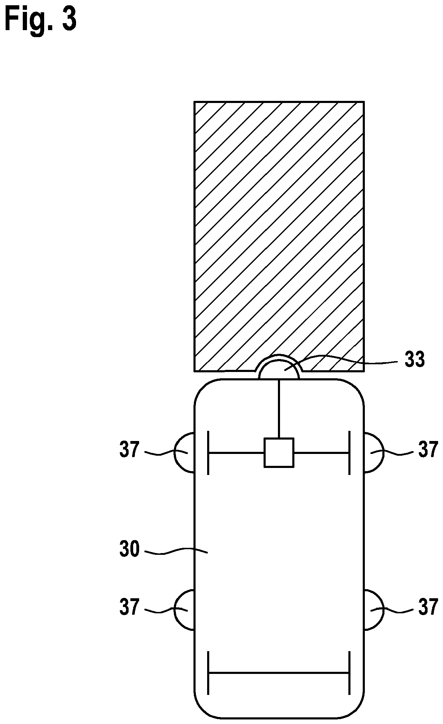

Voraussetzung für das erfindungsgemäße Verfahren ist, dass die an der mobilen Einheit vorgesehenen Sensoren oder der Sensor seitliche Objekte, also Objekte quer zur Fahrtrichtung, erfassen können. Diese Funktion kann prinzipiell von einem frontal angeordneten Sensor, beispielsweise dem Sensor 23, erfüllt werden. Erfindungsgemäß sind hierfür separate Sensoren vorgesehen. **Fig. 3** illustriert eine mobile Plattform 30 mit vier seitlich angeordneten Sensoren 37, die für die Zwecke der Erfindung eingesetzt werden. Es kann sich hierbei um die gleiche Art von Sensoren handeln, die auch für den frontal angeordneten Schutzsensor 33, der stellvertretend für übliche frontal ausgerichtete Schutzabstandssensoren steht, verwendet wird. Es können hierfür jedoch auch andere Arten von Sensoren eingesetzt werden.

Erfindungsgemäß ist es vorgesehen, dass die seitlich detektierbaren Hindernisse insoweit differenziert werden, dass bei sehr schmalen oder kleinen seitlichen Objekten keine Reduzierung der Geschwindigkeit erfolgt. Dies kann durch eine entsprechende Filterung oder Glättung der detektierten Signale erfolgen. Beispielsweise kann die Glättung durch die Bildung eines Medianwertes oder eines Durchschnittswertes der Wandabstände der letzten Sekunde vorgenommen werden. Hierdurch wird vermieden, dass beispielsweise eine seitlich angeordnete Säule, Türzarge oder Ähnliches eine tatsächlich nicht erforderliche Reduzierung der maximalen Geschwindigkeit bewirkt.

Auch die tatsächliche Fahrtrichtung beziehungsweise der Lenkwinkel der mobilen Plattform kann bei dem erfindungsgemäßen Verfahren berücksichtigt werden, wobei dies gesonderte Anforderungen an das Sensorsystem, welches den Abstand zu seitlichen Hindernissen misst, stellt. Je nach Fahrtrichtung wird die Messung in eine andere Richtung ausgerichtet.

Das erfindungsgemäße Verfahren kann darüber hinaus mit Einrichtungen kombiniert werden, die dafür sorgen, dass ein Mindestabstand zu seitlichen Hindernissen, insbesondere zu seitlichen Gebäudeteilen eingehalten wird. Beispielsweise kann bei einem Unterschreiten eines kritischen Abstands zur Wand, der Fahrweg, wenn möglich, derart korrigiert werden, dass der Abstand zur Wand vergrößert wird. Weiterhin kann die Plattform bei Unterschreiten eines kritischen Abstandes zu seitlichen Hindernissen (z.B. Wand) veranlasst werden, anzuhalten oder deutlich zu verlangsamen. Die Position wird dann exakt neu bestimmt. Anschließend kann die Plattform nach einer Korrektur des Abstandes weiterfahren.

## Patentansprüche

1. Verfahren zum Betreiben einer selbstbeweglichen mobilen Plattform (1; 20; 30) mit wenigstens einem Sensor (23; 33, 37) zur Detektion von Objekten in der Umgebung der mobilen Plattform, **dadurch gekennzeichnet, dass** die Geschwindigkeit der mobilen Plattform (1; 20; 30) in Abhängigkeit von einem Abstand zwischen der mobilen Plattform und längs des Fahrweges der mobilen Plattform angeordneten seitlichen Objekten reduziert wird, wobei für die Detektion von längs des Fahrweges angeordneten Objekten ein oder mehrere separate Sensoren (37) vorgesehen sind, die unabhängig von vorhandenen anderen Schutzabstandssensoren (33) der mobilen Plattform (30) eingesetzt werden, um eine Gefahrensituation durch eine Sichteinschränkung der anderen Schutzabstandssensoren (33), die auf frontale Hindernisse ausgerichtet sind, durch seitliche Objekte zu entschärfen, und wobei die Signale der Detektion von längs des Fahrweges angeordneten Objekten derart ausgewertet und/oder gefiltert und/oder geglättet werden, dass eine Mindestgröße und/oder Mindestlänge der Objekte gegeben sein muss, um eine Reduktion der maximalen Geschwindigkeit der mobilen Plattform (1; 20; 30) auszulösen.

2. Verfahren nach Anspruch 1, **dadurch gekennzeichnet, dass** die Fahrtrichtung der mobilen Plattform (1; 20; 30) bei einer Auswertung der Signale der Detektion von längs des Fahrweges angeordneten Objekten berücksichtigt wird.

3. Verfahren nach Anspruch 1 oder Anspruch 2, **dadurch gekennzeichnet, dass** je nach Verwendung der mobilen Plattform (1; 20; 30) die Fahrgeschwindigkeiten der mobilen Plattform konfiguriert werden.

4. Computerprogrammprodukt, welches eingerichtet ist, jeden Schritt eines Verfahrens gemäß einem der Ansprüche 1 bis 3 durchzuführen.

5. Maschinenlesbares Speichermedium, auf welchem ein Computerprogramm nach Anspruch 4 gespeichert ist.

6. Elektronisches Steuergerät, das eingerichtet ist, die Schritte eines Verfahrens gemäß einem der Ansprüche 1 bis 3 durchzuführen.

## Claims

1. Method for operating a self-propelled mobile platform (1; 20; 30) including at least one sensor (23; 33, 37) for detecting objects in the surroundings of the mobile platform, **characterized in that** the speed of the mobile platform (1; 20; 30) is reduced as a function of a distance between the mobile platform and lateral objects arranged along the travel route of the mobile platform, wherein one or more separate sensors (37) are provided for the detection of objects arranged along the travel route, which are used independently of other protective distance sensors (33) of the mobile platform (30) which are present, in order to defuse a dangerous situation by restricting the view of the other protective distance sensors (33) that are oriented towards frontal obstacles by way of lateral objects, and wherein the signals from the detection of objects arranged along the travel route are evaluated and/or filtered and/or smoothed in such a way that a minimum size and/or a minimum length of the objects must exist in order to trigger a reduction of the maximum speed of the mobile platform (1; 20; 30).

2. Method according to Claim 1, **characterized in that** the direction of travel of the mobile platform (1; 20; 30) is taken into account when evaluating the signals from the detection of objects arranged along the travel route.

3. Method according to Claim 1 or Claim 2, **characterized in that** the travel speeds of the mobile platform are configured depending on the use of the mobile platform (1; 20; 30).

4. Computer program product which is configured to carry out each step of a method according to one of Claims 1 to 3.

5. Machine-readable storage medium on which a computer program according to Claim 4 is stored.

6. Electronic control device which is configured to carry out the steps of a method according to one of Claims 1 to 3.

## Revendications

1. Procédé d'exploitation d'une plate-forme mobile automotrice (1 ; 20 ; 30), comprenant au moins un capteur (23 ; 33, 37) pour détecter des objets dans l'environnement de la plate-forme mobile, **caractérisé en ce que** la vitesse de la plate-forme mobile (1 ; 20 ; 30) est réduite en fonction d'une distance entre la plate-forme mobile et des objets latéraux disposés le long du trajet de la plate-forme mobile, dans lequel pour la détection d'objets disposés le long du trajet, un ou plusieurs capteurs séparés (37) sont prévus qui sont mis en œuvre indépendamment d'autres capteurs de distance de sécurité (33) de la plate-forme mobile (30) existants afin de désamorcer par des objets latéraux une situation dangereuse par une limitation du champ visuel des autres capteurs de distance de sécurité (33) qui sont orientés vers des obstacles frontaux, et dans lequel les signaux de la détection d'objets disposés le long du trajet sont évalués et/ou filtrés et/ou lissés de telle sorte qu'une taille minimale et/ou une longueur minimale des objets doivent être données pour déclencher une réduction de la vitesse maximale de la plate-forme mobile (1 ; 20 ; 30).

2. Procédé selon la revendication 1, **caractérisé en ce que** le sens de la marche de la plate-forme mobile (1 ; 20 ; 30) est pris en compte lors d'une évaluation des signaux de la détection d'objets disposés le long du trajet.

3. Procédé selon la revendication 1 ou la revendication 2, **caractérisé en ce que** les vitesses de déplacement de la plate-forme mobile sont configurées en fonction de l'utilisation de la plate-forme mobile (1 ; 20 ; 30).

4. Produit de programme informatique, qui est conçu pour effectuer chaque étape d'un procédé selon l'une quelconque des revendications 1 à 3.

5. Support de stockage lisible par machine, sur lequel est stocké un programme informatique selon la revendication 4.

6. Contrôleur électronique, qui est conçu pour effectuer les étapes d'un procédé selon l'une quelconque des revendications 1 à 3.
